# EUROPÄISCHE PATENTANMELDUNG

(11) **EP 2 927 541 A1**
(43) Veröffentlichungstag der Anmeldung: **07.10.2015**
(21) Anmeldenummer: 15161648.9
(22) Anmeldetag: 30.03.2015
(51) Int. Cl.: F16J 15/06, F16J 15/10, F16L 21/03

(54) **Dichtungselement sowie Konstruktion eines Leitungsgelenkes**

(30) Priorität: 01.04.2014 JP 2014075624
(71) Anmelder: Carl Freudenberg KG, 69469 Weinheim (DE)
(72) Erfinder: Shuji, Takeshita, Kumamoto, 869-2231 (JP)

(57) **Zusammenfassung**

Bei einem Gelenk einer zu verbindenden Leitung (22) verwendetes Dichtungselement (1), das einen Basisteil (11), von dem ein Teil in einer an der Innenfläche eines Gehäuses (21), in das die Leitung eingeschoben wird, gebildeten Rinne (213) aufgenommen wird, einen hervorstehenden Teil (13), der bei dem Basisteil außerhalb der Rinne von der nachgelagerten Seite der Einschubrichtung der Leitung aus zu der Einschubrichtung hin entlanglaufend hervorsteht, und einen konischen Teil (12), der sich elastisch verformt, wenn er an die eingeschobene Leitung anstößt, und bei dem an dem der Leitung gegenüber liegenden Teil eine geneigte Fläche gebildet ist, aufweist.

## Beschreibung

### Technischer Bereich

Die vorliegende Erfindung betrifft ein Dichtungselement, das bei einem Gelenkabschnitt einer Heizöl o. ä. befördernden Leitung verwendet wird, sowie eine Konstruktion eines Leitungsgelenkes, bei der dieses Dichtungselement verwendet wurde.

### Stand der Technik

Herkömmlich ist für das hermetische Verschließen eines Gelenkabschnitts einer Heizöl o. ä. befördernden Leitung eine Dichtungskonstruktion eines Leitungsgelenkes unter Verwendung einer Lippendichtung bekannt (siehe z. B. Patentdokument 1).

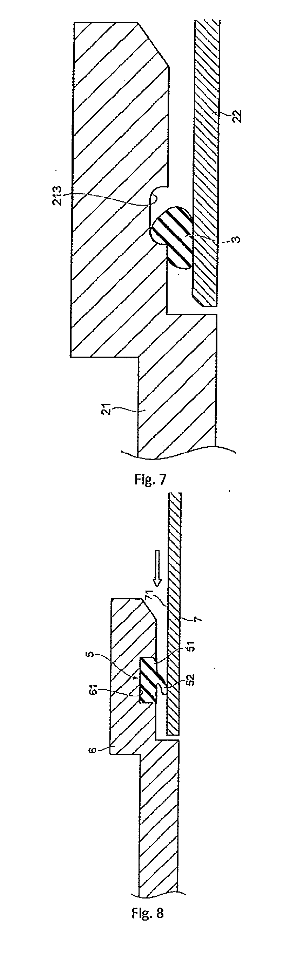

Fig. 8 zeigt die Dichtungskonstruktion eines Gehäuses 6 und einer Leitung 7, bei der eine Lippendichtung 5 verwendet wurde, im Überbück. Ferner wird in Fig. 8 nur ein Teil über dem Umfang des einen Randteils des Leitungsgelenkes gezeigt. Diese Lippendichtung 5 weist gewöhnlich einen an einer Aufnahmerinne 61 des Gehäuses 6 befestigten Fersenteil 51 und einen von dem Fersenteil 51 zu der Leitung 7 gerichtet hervorstehenden Lippenteil 52 auf. In das Innere des Gehäuses 6, bei dem die Lippendichtung 5 im Voraus befestigt wurde, wird die Leitung 7 in Richtung des Pfeils in Fig. 8 eingeschoben. Dabei wird der Lippenteil 52 von der Außenumfangsfläche 71 der Leitung 7 nachgezogen, so dass er sich in Einschubrichtung (Richtung des Pfeils in Fig. 8) neigt. Die Lippendichtung 5 übt ihre Dichtungsfunktion dadurch aus, dass der Lippenteil 52 sich in die oben beschriebene Richtung neigt.

### Dokumente herkömmlicher Technik

[Patentdokument 1] im Amtsblatt veröffentlichte ungeprüfte Patentanmeldung Nr. JP H05-52283

### Beschreibung der Erfindung

### Durch die Erfindung zu lösende Probleme

Aber in dem Falle, dass es erforderlich ist, Heizöl o. ä. mit höherem Druck durch das Innere einer Leitung zu führen, kann an dem Lippenteil einer herkömmlichen Lippendichtung die Druckfestigkeit nicht sichergestellt werden und es besteht die Gefahr, dass keine ausreichende Abdichtungswirkung erreicht werden kann.

Daher ist die vorliegende Erfindung im Hinblick auf die o. a. Probleme getätigt worden und hat zum Ziel, ein Dichtungselement sowie eine Konstruktion eines Leitungsgelenkes zur Verfügung zu stellen, durch die im Vergleich zu einer herkömmlichen Lippendichtung die Druckfestigkeit erhöht wird und eine höhere Abdichtungswirkung erreicht werden kann.

### Mittel zur Problemlösung

Zur Lösung der o. a. Probleme ist die vorliegende Erfindung dadurch gekennzeichnet, dass es sich um ein bei einem Gelenk einer zu verbindenden Leitung verwendetes Dichtungselement handelt, das einen Basisteil, von dem ein Teil in einer an der Innenfläche eines Gehäuses, in das die o. a. Leitung eingeschoben wird, gebildeten Rinne aufgenommen wird, einen hervorstehenden Teil, der bei dem Basisteil außerhalb der o. a. Rinne von der nachgelagerten Seite der Einschubrichtung der o. a. Leitung aus zu der o. a. Einschubrichtung hin entlanglaufend hervorsteht, und einen konischen Teil, der sich elastisch verformt, wenn er an die eingeschobene Leitung anstößt, und bei dem an dem der o. a. Leitung gegenüber liegenden Teil eine geneigte Fläche gebildet ist, aufweist.

Als ein Zustand dieser Erfindung ist es wünschenswert, dass ein zweiter hervorstehender Teil vorhanden ist, der bei dem Basisteil außerhalb der o. a. Rinne von der vorgelagerten Seite der Einschubrichtung der o. a. Leitung aus hervorsteht.

Als ein Zustand dieser Erfindung ist es wünschenswert, dass der o. a. konische Teil eine erste geneigte Fläche aufweist, die sich von der vorgelagerten Seite der Einschubrichtung der o. a. Leitung aus zu der nachgelagerten Seite hin gerichtet der o. a. Leitung annähert.

Als ein Zustand dieser Erfindung ist es wünschenswert, dass der o. a. konische Teil eine zweite geneigte Fläche aufweist, die sich an die o. a. erste geneigte Fläche anschließt und sich von der vorgelagerten Seite der Einschubrichtung der o. a. Leitung aus zu der nachgelagerten Seite hin gerichtet von der o. a. Leitung entfernt.

Als ein Zustand dieser Erfindung ist es wünschenswert, dass die Breite des o. a. Basisteils größer gebildet wird als die Breite der o. a. Rinne und dass ein Teil des o. a. Basisteils elastisch verformt und im Inneren der o. a. Rinne aufgenommen wird.

Weiterhin ist die vorliegende Erfindung gekennzeichnet dadurch, dass es sich um eine Konstruktion eines Leitungsgelenkes handelt, die das o. a. Dichtungselement und ein röhrenförmiges Gehäuse, in das die zu verbindende Leitung eingeschoben wird und an dessen Innenfläche das o. a. Dichtungselement angebracht wird, aufweist, wobei durch die o. a. Leitung, wenn sie in das Innere des o. a. Gehäuses eingeschoben wird, das o. a. Dichtungselement elastisch verformt wird, so dass eine hermetisch verschlossene Konstruktion gebildet wird.

Als ein Zustand dieser Erfindung ist es wünschenswert, dass die o. a. Rinne in der Innenfläche des o. a. Gehäuses ringförmig gebildet wird.

Als ein Zustand dieser Erfindung ist es wünschenswert, dass die außenumfangsseitige Ecke des vorderen Randes der in das Innere des o. a. Gehäuses eingeschobenen Leitung angefast wird.

### Effekt der Erfindung

Durch die vorliegende Erfindung kann die Druckfestigkeit eines Dichtungselementes sowie einer Konstruktion eines Leitungsgelenkes, bei dem dieses Dichtungselement verwendet wurde, erhöht und eine höhere Abdichtungswirkung erreicht werden.

### Kurzbeschreibung der Zeichnungen

- [Fig. 1]: ist eine perspektivische Zeichnung der Dichtung bei einer Ausführungsform.
- [Fig. 2]: ist eine Schnittzeichnung entlang A-A von Fig. 1.
- [Fig. 3]: ist eine Zeichnung, die den Zustand vor dem hermetischen Verschließen des Leitungsgelenkes bei einer Ausführungsform zeigt.
- [Fig. 4]: ist eine Zeichnung, die den Zustand nach dem hermetischen Verschließen des Leitungsgelenkes bei einer Ausführungsform zeigt.
- [Fig. 5]: ist eine Zeichnung, die bei einer hermetisch verschlossenen Konstruktion des Leitungsgelenkes bei einer Ausführungsform den Zustand zeigt, in dem durch ein im Inneren der Leitung befindliches Druckmedium auf die Dichtung Druck ausgeübt wird.
- [Fig. 6]: ist eine Zeichnung, die den Zustand vor dem hermetischen Verschließen des Leitungsgelenkes bei einem Vergleichsbeispiel zeigt.
- [Fig. 7]: ist eine Zeichnung, die den Zustand nach dem hermetischen Verschließen des Leitungsgelenkes bei einem Vergleichsbeispiel zeigt.
- [Fig. 8]: ist eine Zeichnung, die eine hermetisch verschlossene Konstruktion eines herkömmlichen Leitungsgelenkes zeigt.

### Ausführungsformen der Erfindung

Unter Bezugnahme auf die Zeichnungen wird eine bevorzugte Ausführungsform der vorliegenden Erfindung erklärt. Ferner ist die im Folgenden gezeigte Ausführungsform eine Veranschaulichung durch ein Beispiel und im Bereich der vorliegenden Erfindung können verschiedene Ausführungsformen angenommen werden.

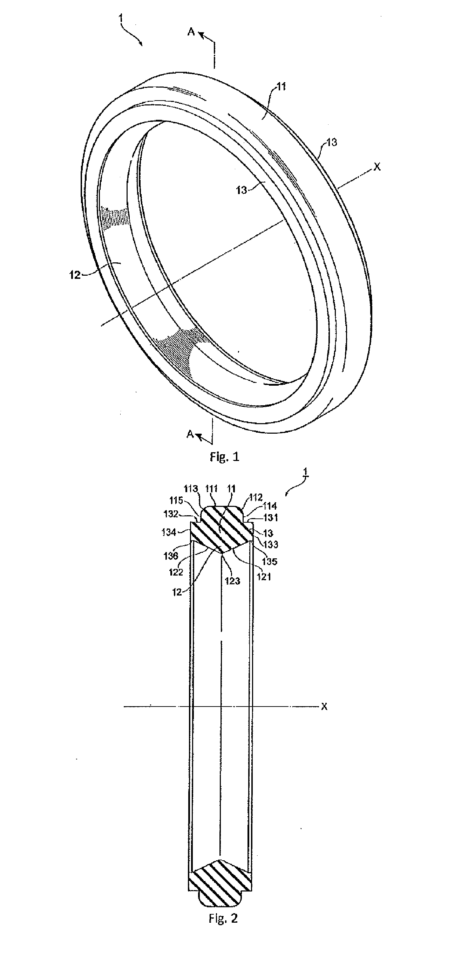

Ein Dichtungselement wird basierend auf Fig. 1 und Fig. 2 erklärt. Das Dichtungselement dient der Verwendung bei einem Gelenk von zu verbindenden Rohren. Wie in Fig. 1 und Fig. 2 gezeigt, ist die Dichtung 1 als Dichtungselement eine so genannte Quetschdichtung. Eine Quetschdichtung erfüllt im Allgemeinen eine Dichtungsfunktion, indem sie in eine Rinne montiert und zusammengepresst wird.

Die Dichtung 1 wird in einer Ringform gebildet. Die Dichtung 1 wird z. B. aus Nitrilkautschuk, Fluorkautschuk, Silikonkautschuk o. ä. synthetischem Kautschukmaterial oder aus Fluoridharz, Polyamidharz, Phenolharz mit Gewebeeinlage o. ä. Harzmaterial gebildet. Die Dichtung 1 weist einen Basisteil 11, einen an der Innenumfangsseite des Basisteils 11 positionierten konischen Teil 12 und zwei hervorstehende Teile 13, die von dem Basisteil 11 nach außen gerichtet hervorstehen, auf.

Wie in Fig. 2 gezeigt weist der Basisteil 11 eine an der Außenseite in radialer Richtung der Dichtung 1 gebildete Außenumfangsfläche 111 auf. Die Außenumfangsfläche 111 weist entlang der Richtung der Achsenlinie X eine bestimmte Breite auf. An beiden Randteilen der Außenumfangsfläche 111 sind in Richtung der Achsenlinie X die die Außenumfangsfläche 111 fortsetzenden, gerundet abgefasten Teile 112, 113 gebildet. An den jeweiligen abgefasten Teilen 112, 113 sind die sich entlang der radialen Richtung der Dichtung 1 nach innen erstreckenden Randflächenteile 114, 115 gebildet, die die jeweiligen abgefasten Teile 112, 113 fortsetzen. Von dem Basisteil 11 wird der Bereich von der o. a. Außenumfangsfläche 111 bis zu den Randflächenteilen 114, 115 im Inneren der an der Innenumfangsfläche des Gehäuses 21 gebildeten Rinne 213 aufgenommen.

Der konische Teil 12 wird dadurch, dass er beim Einfügen der Leitung 22 in das Gehäuse 21 an die Leitung 22 anstößt, elastisch verformt, so dass eine hermetisch verschlossene Konstruktion gebildet wird. Der konische Teil 12 weist an einem der Leitung 22 gegenüber liegenden Teil eine erste geneigte Fläche 121 und eine zweite geneigte Fläche 122 auf, die so gebildet sind, dass sie zu der Achsenlinie X der Dichtung 1 hin gerichtet spitz zulaufen.

Die erste geneigte Fläche 121 ist so gebildet, dass sie sich von der vorgelagerten Seite der Einschubrichtung der Leitung 22 aus zu der nachgelagerten Seite gerichtet der Leitung 22 annähert. D. h. sie ist so gebildet, dass sie sich von dem einen Rand in Breitenrichtung (Richtung der Achsenlinie X) des Basisteils 11 zu dem anderen Rand gerichtet in Richtung des Zentrums der Dichtung 1 erstreckt. Die erste geneigte Fläche 121 ist so gebildet, dass sie sich bis in die Nähe des Zentrums der Breitenrichtung des Basisteils 11 erstreckt.

Die zweite geneigte Fläche 122 ist so gebildet, dass sie sich gegenüber der ersten geneigten Fläche 121 an der nachgelagerten Seite der Einschubrichtung der Leitung 22 fortsetzt und sich von der vorgelagerten Seite der Einschubrichtung der Leitung 22 aus zu der nachgelagerten Seite gerichtet von der Leitung 22 entfernt. D. h. sie ist so gebildet, dass sie sich von dem anderen Rand in Breitenrichtung (Richtung der Achsenlinie X) des Basisteils 11 zu dem einen Rand gerichtet in Richtung des Zentrums der Dichtung 1 erstreckt. Die zweite geneigte Fläche 122 ist so gebildet, dass sie sich bis in die Nähe des Zentrums der Breitenrichtung des Basisteils 11 erstreckt.

Der vordere Randteil der ersten geneigten Fläche 121 und der vordere Randteil der zweiten geneigten Fläche 122 kreuzen sich in der Mitte der Breitenrichtung des Basisteils 11 und an diesem Abschnitt der Vereinigung wird der die erste geneigte Fläche 121 und die zweite geneigte Fläche 122 fortsetzende gerundet abgefaste Teil 123 gebildet.

Die hervorstehenden Teile 13 werden so gebildet, dass sie von den jeweiligen Randflächenteilen 114, 115 des außerhalb der Rinne 213 befindlichen Basisteils 11 jeweils entlang der Richtung der Achsenlinie X nach außen hervorstehen. D. h. ein hervorstehender Teil 13 wird so gebildet, dass er von der nachgelagerten Seite der Einschubrichtung der Leitung 22 in das Gehäuse 21 aus entlang dieser Einschubrichtung hervorsteht, und weiterhin wird einer so gebildet, dass er von der vorgelagerten Seite der Einschubrichtung der Leitung 22 in das Gehäuse 21 aus entlang der der Einschubrichtung entgegengesetzten Richtung hervorsteht (zweiter hervorstehender Teil). Ferner kann ein hervorstehender Teil 13 auch nur an der nachgelagerten Seite der Einschubrichtung der Leitung 22 in das Gehäuse 21 gebildet werden.

Die sich von den Randflächenteilen 114, 115 erstreckenden Erweiterungsflächen 131, 132 werden parallel gegenüber der Achsenlinie X gebildet. An den Randteilen der jeweiligen Erweiterungsflächen 131, 132 werden die sich an die betreffenden Erweiterungsflächen 131, 132 anschließenden Randflächenteile 133, 134 gebildet. Die jeweiligen Randflächenteile 133, 134 sind so gebildet, dass sie sich entlang der radialen Richtung der Dichtung 1 nach innen erstrecken. An den einen Randflächenteil 133 schließt sich über den entlang der Richtung der Achsenlinie X verlaufenden ebenen Teil 135 der Randteil der ersten geneigten Fläche 121 an, und an den anderen Randflächenteil 134 schließt sich über den entlang der Richtung der Achsenlinie X verlaufenden ebenen Teil 136 der Randteil der zweiten geneigten Fläche 122 an. Hierbei werden die ebenen Teile 135, 136 so gebildet, dass ihre Länge entlang der Richtung der Achsenlinie X kürzer ist als die Länge der Ennreiterungsffächen 131, 132 in gleicher Richtung. Folglich stehen die Randteile der jeweiligen geneigten Flächen 121, 122 weiter nach außen heraus als der Basisteil 11 und reichen bis zu den hervorstehenden Teilen 13.

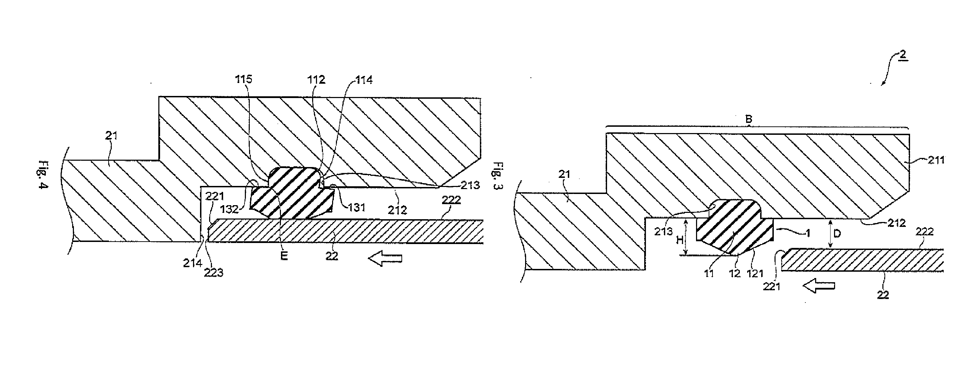

Im Folgenden wird eine Konstruktion eines Leitungsgelenkes 2 basierend auf Fig. 3 bis Fig. 5 erklärt. Wie in Fig. 3 gezeigt weist die Konstruktion eines Leitungsgelenkes 2 die o. a. Dichtung 1, ein den Gelenkabschnitt B bildendes Gehäuse 21 und eine Leitung 22, die in das Gehäuse 21 in Richtung des Pfeils in Fig. 3 eingeschoben wird, auf. Ferner wird in den Zeichnungen Fig. 3 bis Fig. 5 nur ein Teil über dem Umfang des einen Randteils des Leitungsgelenkes 2 gezeigt.

Das Gehäuse 21 wird in einer Röhrenform gebildet. Das Gehäuse 21 weist an dem Randteil 211 in Richtung der Achsenlinie X den Gelenkabschnitt B auf. Der Innendurchmesser des zu dem Gelenkabschnitt B werdenden Randteils 211 des Gehäuses 21 ist gegenüber dem Innendurchmesser der anderen Stellen erweitert und innerhalb des Bereiches mit erweitertem Durchmesser werden die Dichtung 1 und die Leitung 22 angeordnet. Weiterhin wird die Größe der Dichtung 1 so festgelegt, dass, wenn die Leitung 22 in das Gehäuse 21 eingeschoben und durch die Dichtung 1 hermetisch verschlossen wurde, die Innenumfangsfläche des Gehäuses 21 und die Innenumfangsfläche der Leitung 22 bündig sind.

Bei dem Gehäuse 21 ist an der Innenumfangsfläche 212 des Randteils 211 eine ringförmige Rinne 213 gebildet, die einen Teil des Basisteils 11 der Dichtung 1 aufnimmt. In der Rinne 213 wird nur ein Teil des Basisteils 11 aufgenommen. Die Rinne 213 wird so gebildet, dass sie eine Breite aufweist, die kleiner ist als die Breite (Länge entlang der Richtung der Achsenlinie X) des Basisteils 11, d. h. als der Abstand zwischen den Randflächenteilen 114, 115. Dies dient dazu, dass dadurch, dass ein Teil des Basisteils 11 elastisch verformt in der Rinne 213 aufgenommen wird, die Dichtung 1 sich nicht einfach aus dem Inneren der Rinne 213 lösen kann.

Die Leitung 22 wird in einer Ringform gebildet. Die Leitung 22 bildet einen Strömungsweg für Öl, Wasser o. ä. Druckflüssigkeiten. Die Leitung 22 weist an dem Eckteil der Seite der der Dichtung 1 gegenüber liegenden Fläche 222 (Seite der Außenumfangsfläche) am vorderen Randteil in Einschubrichtung den abgefasten Teil 221 auf, bei dem eine Abfasbehandlung ausgeführt wurde. Da dieser abgefaste Teil 221 beim Einfügen der Leitung 22 in das Gehäuse 21 der ersten geneigten Fläche 121 gegenüber liegt, wird verhindert, dass der Eckteil der Leitung 22 an der Dichtung 1 hängen bleibt, so dass das Einfügen der Leitung 22 noch einfacher gemacht werden kann.

In Fig. 3 wird die Höhe H der Dichtung 1 (Abstand von den Erweiterungsflächen 131, 132 des hervorstehenden Teils 13 bis zu dem abgefasten Teil 123 des konischen Teils 12) so gebildet, dass sie größer ist als der Abstand D von der Innenumfangsfläche 212 des Randteils 211 des Gehäuses 21 bis zu der Außenumfangsfläche 222 der eingeschobenen Leitung 22.

Basierend auf Fig. 3 und Fig. 4 wird ein Verfahren erklärt, mit dem ein Leitungsgelenk an der Leitung 22 montiert und die Konstruktion eines Leitungsgelenkes 2 aufgebaut wird. Wie in Fig. 3 gezeigt wird ein Teil des Basisteils 11 der Dichtung 1 in das Innere der Rinne 213 des Gehäuses 21 eingepasst. Da die Dichtung 1 durch die ihr eigene Elastizität danach bestrebt ist, in den ursprünglichen Zustand zurückzukehren, und somit die Wandfläche der Rinne 213 unter Druck setzt, wird sie im Inneren der Rinne 213 fixiert. Hierbei kommen die Außenumfangsfläche 111, die abgefasten Teile 112, 113 und die Randflächenteile 114, 115 des Basisteils 11 jeweils ohne Zwischenraum mit dem Inneren der Rinne 213 in Kontakt. Weiterhin kommen die Erweiterungsflächen 131, 132 des hervorstehenden Teils 13 jeweils mit der Innenumfangsfläche 212 des Gehäuses 21 in Kontakt.

Dann wird in Richtung des Pfeils in Fig. 3 die Leitung 22 in das Innere des Gehäuses 21 eingefügt. Dabei kommt der abgefaste Teil 221 der Leitung 22 mit der ersten geneigten Fläche 121 des konischen Teils 12 der Dichtung 1 in Kontakt.

Dann wird wie in Fig. 4 gezeigt die Leitung 22 eingeschoben bis der vordere Randteil 223 der Leitung 22 sich in der Nähe der Randfläche 214 in Richtung der Achsenlinie X des Gehäuses 21 befindet. Dabei gleiten der abgefaste Teil 221 und die Außenumfangsfläche 222 der Leitung 22 unter Reibung über die erste geneigte Fläche 121 des konischen Teils 12 der Dichtung 1. Gleichzeitig damit pressen der abgefaste Teil 221 und die Außenumfangsfläche 222 der Leitung 22 den konischen Teil 12 der Dichtung 1 in radialer Richtung nach außen gerichtet zusammen. Dadurch, dass der Randflächenteil 115 des Basisteils 11 mit der Wandfläche der Rinne 213 in Kontakt kommt, wird eine Bewegung der Dichtung 1 gehemmt und die Dichtung 1 ist einhergehend mit dem Einschieben der Leitung 22 bestrebt, sich auf der Papieroberfläche von Fig. 4 in Uhrzeigerrichtung zu drehen. Aber die Erweiterungsfläche 132 des hervorstehenden Teils 13 liegt an der Innenumfangsfläche 212 des Gehäuses 21 an, so dass eine Drehung der Dichtung 1 gehemmt wird und die Dichtung 1 sich lediglich ein wenig neigt.

Im Ergebnis dessen wird in dem in Fig. 4 gezeigten endgültigen Montagezustand des Leitungsgelenkes 2 die Stelle, an der sich der Randflächenteil 115 des Basisteils 11 und die Erweiterungsfläche 132 des hervorstehenden Teils 13 kreuzen (Grenzabschnitt), im Montagestadium zum Spannungskonzentrationspunkt E.

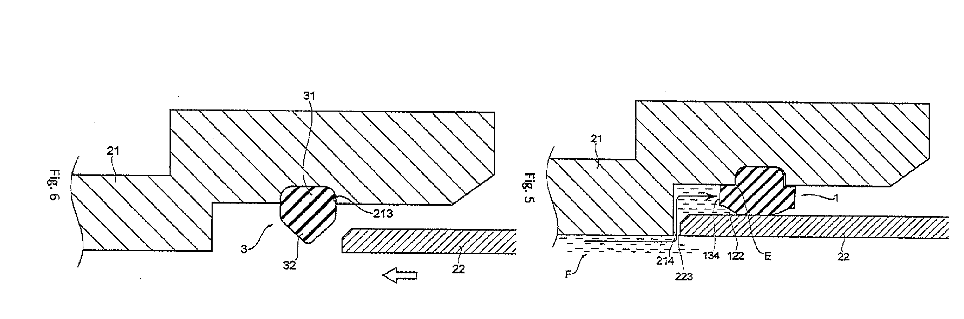

Basierend auf Fig. 5 wird der Zustand erklärt, in dem in das Innere des Leitungsgelenkes 2 die Druckflüssigkeit F fließen gelassen wurde. Von der Druckflüssigkeit F fließt der größte Teil in das Innere des Gehäuses 21 und der Leitung 22. Aber ein Teil der Druckflüssigkeit F fließt durch den Raum zwischen der Randfläche 214 in Richtung der Achsenlinie des Gehäuses 21 und des vorderen Randteils 223 der Leitung 22 und erreicht die Dichtung 1. Die Druckflüssigkeit F, die die Dichtung 1 erreicht hat, übt auf die geneigte Fläche 122 des konischen Teils 12 und den Randflächenteil 134 des hervorstehenden Teils 13 einen Druck aus. Durch diesen Druck wird die an dem Spannungskonzentrationspunkt E wirkende Spannung abgeschwächt.

Durch einen wie oben beschriebenen Aufbau wird beim Einschieben der Leitung 22 in das Innere des Gehäuses 21 der konische Teil 12 der Dichtung 1 ausreichend zusammengedrückt, weil die Höhe H der Dichtung 1 vor dem Einschieben in die Leitung 22 größer vorgesehen ist als der Abstand D von der Innenumfangsfläche 212 des Randteils 211 des Gehäuses 21 bis zu der Außenumfangsfläche 222 der Leitung 22 (siehe Fig. 3). Folglich kann die Abdichtungswirkung des Leitungsgelenkes 2 gewährleistet werden, auch wenn die Druckflüssigkeit F mit höherem Druck einfließt.

Weiterhin kann auch in dem Falle, dass das Gehäuse 21 und die Leitung 22 exzentrisch sind, die Menge der betreffenden Exzentrizität absorbiert werden, sofern sie sich innerhalb des Bereiches der oben beschriebenen Differenz zwischen der Höhe H und dem Abstand D befindet. Folglich kann auch in dem Falle, dass das Gehäuse 21 und die Leitung 22 exzentrisch sind, die Abdichtungswirkung des Leitungsgelenkes 2 gewährleistet werden.

Da weiterhin der hervorstehende Teil 13 so gebildet ist, dass er sich von dem Basisteil 11 aus entlang der Richtung der Achsenlinie X erstreckt, stößt beim Einfügen der Leitung 22 in das Gehäuse 21 der hervorstehende Teil 13 an die Innenumfangsfläche 212 des Gehäuses 21 an und verhindert eine übermäßige Drehung der Dichtung 1 (siehe Fig. 4). Daher kann ein mit dem Einschieben der Leitung 22 einhergehendes Hochbiegen der Dichtung 1 verhindert werden. Folglich kann die Abdichtungswirkung des Leitungsgelenkes 2 gewährleistet werden, auch wenn die Druckflüssigkeit F mit höherem Druck einfließt.

Weiterhin kann ein mit dem Einschieben der Leitung 22 einhergehendes Hochbiegen der Dichtung 1 auf ein Minimum unterdrückt werden, weil in dem

Zustand, in dem die Dichtung 1 in die Rinne 213 des Gehäuses 21 eingefügt ist, die Erweiterungsflächen 131, 132 des hervorstehenden Teils 13 jeweils die Innenumfangsfläche 212 des Gehäuses 21 berühren (siehe Fig. 3). Daher kann die Abdichtungswirkung des Leitungsgelenkes 2 gewährleistet werden, auch wenn die Druckflüssigkeit F mit höherem Druck einfließt.

Weiterhin kann auch in dem Falle, dass die Länge in Richtung der Achsenlinie X des Basisteils 11 der Dichtung 1 geringer ist als die Länge in Richtung der Achsenlinie X der Rinne 213 des Gehäuses 21, ein mit dem Einschieben der Leitung 22 einhergehendes Hochbiegen der Dichtung 1 unterdrückt werden, weil der hervorstehende Teil 13 an die Innenumfangsfläche 212 des Gehäuses 21 anstößt. Daher kann die Abdichtungswirkung des Leitungsgelenkes 2 gewährleistet werden, auch wenn die Druckflüssigkeit F mit höherem Druck einfließt.

Da weiterhin die Dichtung 1 den konischen Teil 12 aufweist, kann verhindert werden, dass beim Einschieben der Leitung 22 die Leitung 22 und die Dichtung 1 aneinander hängen bleiben. Daher wird ein reibungsloses Einschieben der Leitung 22 möglich.

Da weiterhin der konische Teil 12 zur Innenumfangsseite hin gerichtet in Richtung der Achsenlinie X symmetrisch spitz zulaufend gebildet ist, treten bei der Montage der Dichtung 1 keine Probleme der Ausrichtung auf. Daher kann eine fehlerhafte Montage der Dichtung 1 verhindert werden.

Da weiterhin die Leitung 22 den abgefasten Teil 221 aufweist, der die geneigte Fläche 121 des konischen Teils 12 berührt, kann verhindert werden, dass einhergehend mit dem Einschieben der Leitung 22 an der Dichtung 1 Kerben o. ä. Beschädigungen entstehen. Daher kann eine durch diese Kerben o. ä. verursachte Beschädigung der Dichtung 1 vermieden werden. Folglich kann die Abdichtungswirkung des Leitungsgelenkes 2 gewährleistet werden, auch wenn die Druckflüssigkeit F mit höherem Druck einfließt.

Da weiterhin im Zustand der Verwendung des Leitungsgelenkes 2 die Druckflüssigkeit F, die die Dichtung 1 erreicht hat, auf die geneigte Fläche 122 des konischen Teils 12 und den Randflächenteil 134 des hervorstehenden Teils 13 einen Druck ausübt, kann die im Stadium der Montage des Leitungsgelenkes 2 entstandene Spannungskonzentration an dem Spannungskonzentrationspunkt E abgeschwächt werden (siehe Fig. 4, Fig. 5). Daher kann eine von dem Spannungskonzentrationspunkt E ausgehend hervorgerufene Beschädigung der Dichtung 1 vermieden werden. Folglich kann die Abdichtungswirkung des Leitungsgelenkes 2 gewährleistet werden, auch wenn die Druckflüssigkeit F mit höherem Druck einfließt.

Weiterhin werden durch den Druck der Druckflüssigkeit F, die die Dichtung 1 erreicht hat, die im endgültigen Montagezustand des Leitungsgelenkes 2 gebildeten Spalte (Spalt zwischen der Erweiterungsfläche 131 der Dichtung 1 und der Innenumfangsfläche 212 des Gehäuses 21, Spalt zwischen dem abgefasten Teil 112 und dem Randflächenteil 114 der Dichtung 1 und der Rinne 213) kleiner (siehe Fig. 4, Fig. 5). Folglich können die Berührungsfläche von Dichtung 1 und Rinne 213 sowie die Berührungsfläche von Dichtung 1 und Innenumfangsfläche 212 des Gehäuses 21 vergrößert werden. Folglich kann die Abdichtungswirkung des Leitungsgelenkes 2 gewährleistet werden, auch wenn die Druckflüssigkeit F mit höherem Druck einfließt.

Da weiterhin die Dichtung 1 zwischen der Rinne 213 des Gehäuses 21 und der Außenumfangsfläche 222 der Leitung 22 zusammengedrückt wird, ist die Dichtung 1 in dem Falle, dass auf die Dichtung 1 der Druck der Druckflüssigkeit F ausgeübt wird, bestrebt, sich in radialer Richtung nach innen und außen auszudehnen. Dadurch können der Berührungsdruck zwischen Dichtung 1 und Leitung 22 sowie der Berührungsdruck zwischen Dichtung 1 und Gehäuse 21 durch den Selbstabdichtungseffekt vergrößert werden. Daher kann die Abdichtungswirkung des Leitungsgelenkes 2 noch mehr verbessert werden.

Das eine solche Konstruktion aufweisende Leitungsgelenk 2 kann ein Hochbiegen der Dichtung 1 beim Einschieben der Leitung 22 verhindern und kann verhindern, dass einer Exzentrik von Gehäuse 21 und Leitung 22 gefolgt wird. Weiterhin kann es die im Stadium der Montage des Leitungsgelenkes 2 entstandene Spannungskonzentration an dem Spannungskonzentrationspunkt E der Dichtung 1 abschwächen und einen Selbstabdichtungseffekt der Dichtung 1 erreichen. Daher kann die Druckfestigkeit bei dem Leitungsgelenk 2 verbessert werden und darüber hinaus kann die Abdichtungswirkung verbessert werden. Da weiterhin der Einschub der Dichtung 1 reibungslos durchgeführt werden kann und eine fehlerhafte Montage der Dichtung 1 verhindert werden kann, kann die Montage des Leitungsgelenkes 2 vereinfacht werden.

Im Folgenden wird ein Vergleich der Dichtungsfähigkeit der o. a. Dichtung und einer Dichtung ohne hervorstehenden Teil durchgeführt.

Fig. 6 ist eine Zeichnung, die bei einer Konstruktion zum hermetischen Verschließen eines Leitungsgelenkes bei einem Vergleichsbeispiel den Zustand vor dem hermetischen Verschließen des Leitungsgelenkes zeigt. Ferner weisen die in den jeweiligen Zeichnungen mit identischen Zeichen versehenen Teile einen identischen Aufbau auf und eine Erklärung wird eingespart.

Eine Dichtung 3 unterscheidet sich von einer der o. a. Ausführungsform gemäßen Dichtung 1 in dem Punkt, dass sie keinen hervorstehenden Teil 13 aufweist. Die Dichtung 3 weist einen Basisteil 31, der in die Rinne 213 des Gehäuses 21 eingefügt wird, und einen konischen Teil 32, der von dem Basisteil 31 aus zu der Richtung der Leitung 22 hin spitz zulaufend gebildet wird, auf. Die Dichtung 3 ist eine so genannte Quetschdichtung. Daher ist die Funktion der Dichtung 3, die darin besteht, dass dadurch, dass einhergehend mit dem Einschieben der Leitung 22 der konische Teil 12 zusammengedrückt wird, eine Abdichtungswirkung zur Geltung gebracht wird, identisch mit der der Dichtung 1.

Fig. 7 ist eine Zeichnung, die bei der in Fig. 6 gezeigten Konstruktion zum hermetischen Verschließen eines Leitungsgelenkes den Zustand nach dem Einschieben der Leitung 22 in das Innere des Gehäuses 21 zeigt. In diesem Falle dreht sich die Dichtung 3 einhergehend mit dem Einschieben der Leitung 22 in Uhrzeigerrichtung auf der Papierfläche von Fig. 7, so dass ein Hochbiegen entsteht und keinesfalls eine gute Abdichtungswirkung zur Geltung gebracht werden kann.

Ferner kann die Stelle des Gehäuses 21, die im Stadium der Montage mit dem Spannungskonzentrationspunkt E in Berührung kommt (Stelle, an der sich die Rinne 213 und die Innenumfangsfläche 212 kreuzen), auch zu einer gerundeten Form abgefast werden. Dadurch kann im Stadium der Montage die Spannung an dem Spannungskonzentrationspunkt E abgeschwächt werden.

Ferner bestimmt der Neigungswinkel der geneigten Flächen 121, 122 des konischen Teils 12 die Einschubfähigkeit der Leitung 22 und die Abdichtungswirkung des Leitungsgelenkes 2 und ist damit antinomisch. D. h. je größer der Neigungswinkel der geneigten Flächen 121, 122 gestaltet wird, desto besser wird zwar die Abdichtungswirkung, aber die Einschubfähigkeit der Leitung 22 wird schlechter. Andererseits wird, je kleiner der Neigungswinkel der geneigten Flächen 121, 122 gestaltet wird, zwar die Einschubfähigkeit der Leitung 22 besser, aber die Abdichtungswirkung wird schlechter. Entsprechend den Umständen, unter denen das Leitungsgelenk verwendet wird, wird ein geeigneter Neigungswinkel gewählt.

Das oben erklärte Leitungsgelenk zeigt einen Zustand der vorliegenden Erfindung, schränkt aber diese Erfindung nicht ein, sondern es ist möglich, dass verschiedene Ausführungsformen innerhalb des Umfangs der vorliegenden Erfindung beliebig verändert werden.

## Patentansprüche

1. Dichtungselement, **gekennzeichnet dadurch, dass** es sich um ein bei einem Gelenk einer zu verbindenden Leitung verwendetes Dichtungselement handelt, das einen Basisteil, von dem ein Teil in einer an der Innenfläche eines Gehäuses, in das die o. a. Leitung eingeschoben wird, gebildeten Rinne aufgenommen wird, einen hervorstehenden Teil, der bei dem Basisteil außerhalb der o. a. Rinne von der nachgelagerten Seite der Einschubrichtung der o. a. Leitung aus zu der o. a. Einschubrichtung hin entlanglaufend hervorsteht, und einen konischen Teil, der sich elastisch verformt, wenn er an die eingeschobene Leitung anstößt, und bei dem an dem der o. a. Leitung gegenüber liegenden Teil eine geneigte Fläche gebildet ist, aufweist.

2. Dichtungselement gemäß Anspruch 1, **gekennzeichnet dadurch, dass** ein zweiter hervorstehender Teil vorhanden ist, der bei dem Basisteil außerhalb der o. a. Rinne von der vorgelagerten Seite der Einschubrichtung der o. a. Leitung aus hervorsteht.

3. Dichtungselement gemäß Anspruch 1 oder 2, **gekennzeichnet dadurch, dass** der o. a. konische Teil eine erste geneigte Fläche aufweist, die sich von der vorgelagerten Seite der Einschubrichtung der o. a. Leitung aus zu der nachgelagerten Seite hin gerichtet der o. a. Leitung annähert.

4. Dichtungselement gemäß Anspruch 3, **gekennzeichnet dadurch, dass** der o. a. konische Teil eine zweite geneigte Fläche aufweist, die sich an die o. a. erste geneigte Fläche anschließt und sich von der vorgelagerten Seite der Einschubrichtung der o. a. Leitung aus zu der nachgelagerten Seite hin gerichtet von der o. a. Leitung entfernt.

5. Dichtungselement gemäß einem der Ansprüche 1 bis 4, **gekennzeichnet dadurch, dass** die Breite des o. a. Basisteils größer gebildet wird als die Breite der o. a. Rinne und dass ein Teil des o. a. Basisteils elastisch verformt und im Inneren der o. a. Rinne aufgenommen wird.

6. Konstruktion eines Leitungsgelenkes, **gekennzeichnet dadurch, dass** sie ein Dichtungselement gemäß einem der Ansprüche 1 bis 5, und ein röhrenförmiges Gehäuse, in das die zu verbindende Leitung eingeschoben wird und an dessen Innenfläche das o. a. Dichtungselement angebracht wird, aufweist, wobei durch die o. a. Leitung, wenn sie in das Innere des o. a. Gehäuses eingeschoben wird, das o. a. Dichtungselement elastisch verformt wird, so dass eine hermetisch verschlossene Konstruktion gebildet wird.

7. Konstruktion eines Leitungsgelenkes gemäß Anspruch 6, **gekennzeichnet dadurch, dass** die o. a. Rinne in der Innenfläche des o. a. Gehäuses ringförmig gebildet wird.

8. Konstruktion eines Leitungsgelenkes gemäß Anspruch 6 oder 7, **gekennzeichnet dadurch, dass** die außenumfangsseitige Ecke des vorderen Randes der in das Innere des o. a. Gehäuses eingeschobenen Leitung angefast wird.
